# EUROPEAN PATENT SPECIFICATION

(11) **EP 4 128 550 B1**
(45) Date of publication and mention of the grant of the patent: **01.10.2025**
(21) Application number: 21718185.8
(22) Date of filing: 18.03.2021
(51) Int. Cl.: H04B 3/54

(54) **COMPACT UNIVERSAL EXTENSION CORD**
KOMPAKTE UNIVERSAL-VERLÄNGERUNGSSCHNUR
RALLONGE UNIVERSELLE COMPACTE

(30) Priority: 27.03.2020 IT 202000006337
(43) Date of publication of application: 08.02.2023
(73) Proprietor: NIR S.R.L., 70100 Bari (IT)
(72) Inventor: DE FECONDO, Diego, 35020 Due Carrare (PD) (IT)
(74) Representative: Conversano, Gabriele
(86) International application number: PCT/IB2021/052264
(87) International publication number: WO 2021/191751

(56) References cited:
- US-A1- 2002 186 714
- US-A1- 2007 116 042
- US-B1- 6 253 893

## Description

### Technical field of the Invention

The present invention finds its application, in general, in the sector of electrical material provision. In particular, the invention relates to an extension which can be used in very large environments, and which is suitable for bringing both electrical power and data connectivity to a point where there is the necessary of connecting an electrical device.

Examples of contexts in which the use of very long extensions is required can be: a construction site, a large warehouse, or a setting up context for an exhibition (fair or museum).

### Prior Art

When it is necessary to connect a device to an electrical network in a point that is far from a power outlet, or to establish a wired data connection in a point far from the first access to a data network, in general, you can use of a cable as long as necessary (depending on the needs). Such cable must be terminated with suitable connectors at its ends: to couple correctly to the network on one side (whatever it is), and to offer, at the other end, a socket suitable for connecting the device to be connected which, normally, is equipped with its own cable with a particular connector.

These cables are commonly called "extensions" as they can be seen as an extension of the cable supplied with the device to be connected, which, in fact, must reach an access to the network that is very distant. This solution is very simple, also from a conceptual point of view, and it does not pose any particular technical problems.

Some technical problems, in the realization of an extension, can be identified in the cases where it is necessary to have very long extensions (meaning several tens of meters). In fact, in very long extensions there could be the difficulty to store them without tangling the cable and, when not in use, they could be particularly bulky. It should be noted that the extensions are normally used in contexts of temporary use, and therefore it is normal that they are installed and uninstalled frequently, moved from one point to another, transported and stored. Therefore, it is quite important to take care of the practicality with which they can be moved and stored, being able to wrap them neatly when not in use, to avoid annoying cable knots.

For these reasons, many extensions for electric power supply are provided with a rotating spool equipped with a crank which facilitates their winding; they also have a carrying handle. The presence of an element that acts as a support, which is a rewinding spool, can be exploited to contain a multi-socket with various types of sockets, in order to connect the main types of plugs; in fact, one end of the cable remains attached to the spool even when the extension is unrolled. Therefore, the spool remains in the point where the power supply must be remoted, while the cable is unrolled to allow you to reach, with the other end, a point where it is possible to connect to the network.

In some cases, the extensions can be associated with a set of accessories including the most common plug adapters, in order to make it possible to connect them to different types of sockets, and making the overall kit (extension and accessories) quite universal for to the different types of connectors.

What has been said above certainly depicts very widespread cases which regard electric extension cables; on the other hand, as regards the extension cables for data connections, the offer of kits is less rich, and the most frequent solution is the simpler one, which consists in the use of an ad-hoc headed cable (depending on the case) and of the length you need.

The market does not offer universal extensions to remotize simultaneously both power supply and data connectivity. The reason is quite clear: in fact, access to the electricity grid is usually more widespread than access to data, and therefore, in real use cases, the extension should be able to connect to two physically distant points.

However, despite the simple tricks mentioned briefly, such as the possibility of rewinding the extensions on a special spool, to facilitate their transport, the extensions currently available are still quite uncomfortable to use, especially if very long, and also quite bulky.

Ultimately, the prior art does not propose a universal extension that can remotize access both data and power supply in a generic point.

Here below are cited some known art documents, which are considered somehow relevant for the purposes of the invention described in the following part of this description:
US 2002/186714 A1 (Mestdagh Denis J [FR]) 12 December 2001
US 2007/116042 A1 (Lee Chiang-Ta [TW] et al.) 24 May 2007
US 6 253 893 B1 (Chi-Min Hu [TW]) 3 July 2001

### Summary of the Invention

The present invention is defined by the attached independent claims. Other preferred embodiments may be found in the dependent claims. The present application discloses an extension system (100) adapted to make available at a remote point (141) of a work-environment (210) at least one access to an electrical network and at least one access to a data network, and said extension system (100) comprises: S a remote element (140), adapted to be positioned in said work environment (210), on which there are connectors to provide at least one access to an electrical network and at least one access to a data network; S a "ribbon cable" (120) suitable to be rolled on said remote element (140) and unrolled as necessary, in order to reach, with its free end, an electric socket (411), present in said work-environment (210), suitable for connection to an electrical network (400); a first "Powerline" modem (110) designed to be connected to an access to a data transmission network (300), and to be also connected to said electrical network (400); and said extension system (100) is characterized in that it also comprises a second "Powerline" modem (130), integrated in said remote element (140), and said second "Powerline" modem (130) is designed to be coupled to said first "Powerline" modem (110) by means of said electrical network (400), in order to make available said at least one access to a data network in said emote point (141), by said extension system (100).

### Brief Description of the Drawings

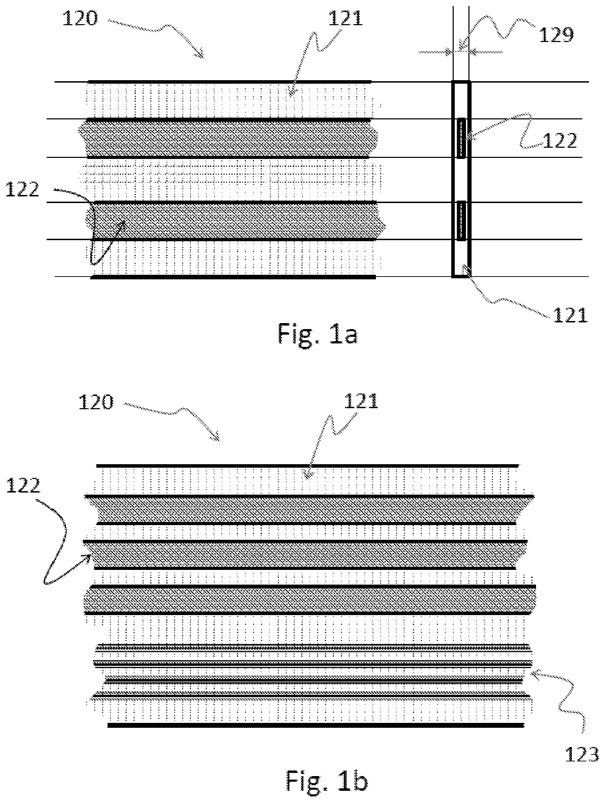

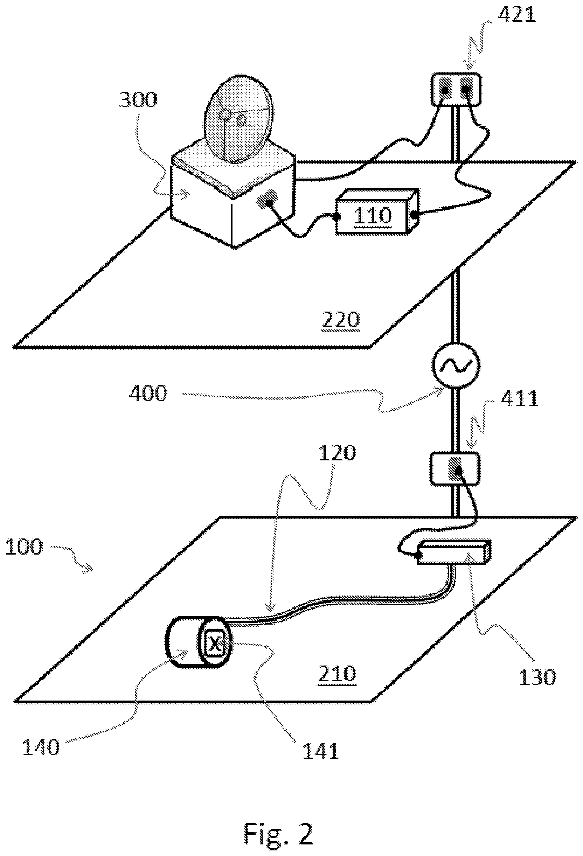

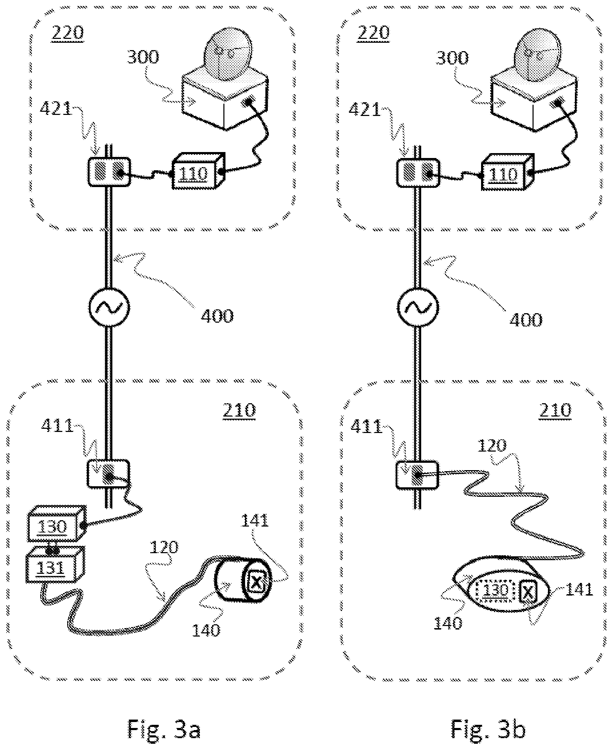

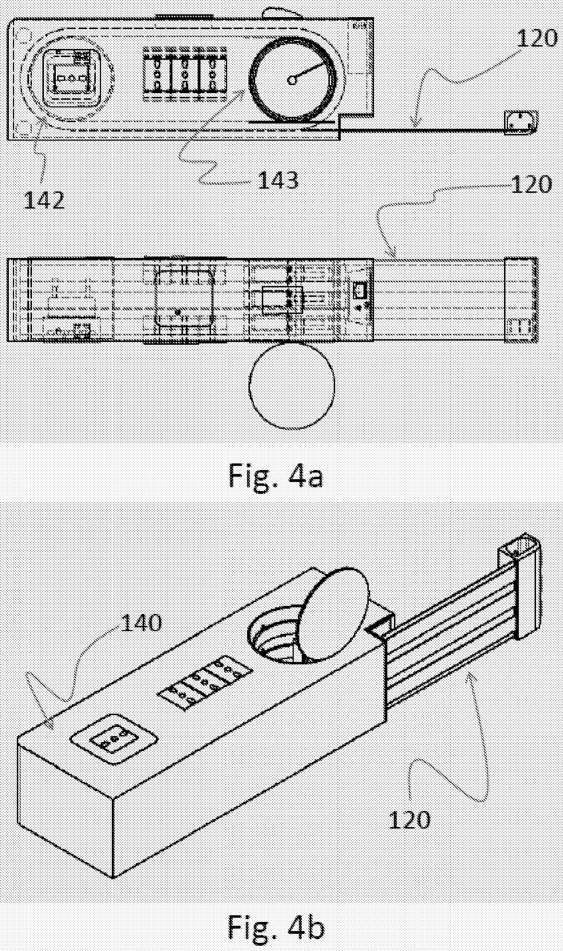

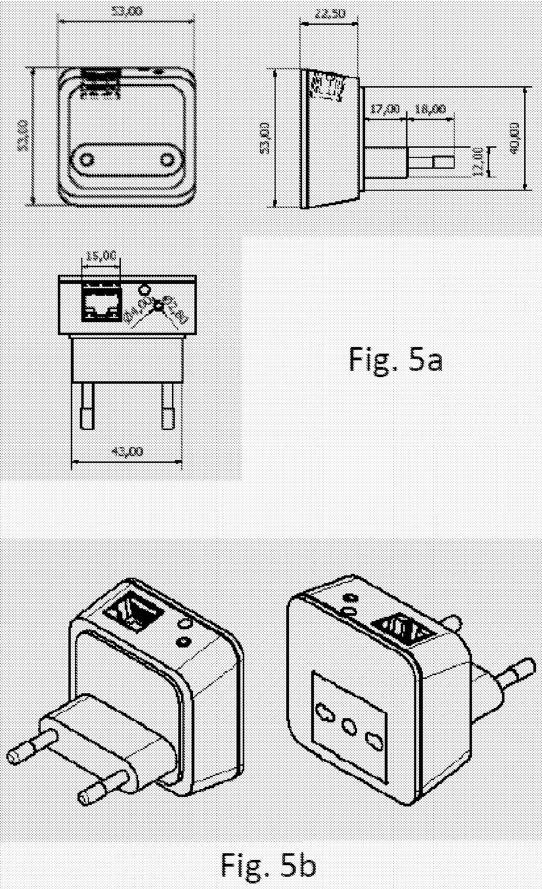

This invention has further advantages, which will become more evident from the following description, from some examples of practical embodiments which illustrate further details, from the attached claims which form an integral part of the present description, and from the attached figures in which:
✔ Figure 1a schematically shows two orthogonal views of a "ribbon cable" according to the prior art, comprising two electrical conductors.
✔ Figure 1b schematically shows a section of another "ribbon cable", of a type suitable for application in the present invention, comprising three electrical conductors and some cables dedicated to data transmission.
✔ Figure 2 shows, in a schematic and simplified way, an extension system according to the invention in a typical application context.
✔ Figures 3a and 3b show two architectural variants of the extension system according to the invention.
✔ Figures 4a and 4b show a remote element of an "extension system" according to the invention.
✔ Figures 5a and 5b show a "Powerline" modem available on the shelf, of the type usable for the implementation of the present invention.

### Detailed Description

Figure 1a presents two orthogonal views of a very simple piece of "ribbon cable", but still suitable for use in an implementation of the present invention.

The number 120 indicates the "ribbon cable" as a whole. In the top view (left view) you can appreciate the presence of two conductive tapes indicated with the number 122. These conductive tapes 122 are kept parallel, spaced and insulated by a protective sheath, indicated with the number 121.

In the sectional view (in the right part of Figure 1a) it can be appreciated how the two conductive strips 122 are flat and thin, and how they are contained inside the protective sheath 121. The number 129 indicates the thickness of the "ribbon cable"120. Said thickness 129 represents the most interesting dimensional data of these types of cables. In fact, it is possible to make "ribbon cables" 120 with excellent conductive properties, and excellent insulation, while maintaining thicknesses that are much lower than a millimeter. It is precisely this dimension, so thin, that allows you to make an extension, even very long, which, when wrapped, is still very compact. The "ribbon cable" 120 shown in Figure 1a is extremely simple as it contains only two conductive tapes 122, which are sufficient for a first description of this type of cable. A "ribbon cable" 120, like the one in the figure, with two conductors is suitable for carrying a difference in potential both in the alternating and continuous regime. "Ribbon cables" with three conductors allow carrying also the neutral; it is then possible to make "ribbon cables" with four conductors to carry three-phase power supplies. In general it is possible to propose "ribbon cables" with a further greater number of conductors, in order to accommodate any power supply architecture envisaged in a project (e.g. by distributing both alternating and continuous power supplies, perhaps at different voltages).

Figure 1b shows a piece of "ribbon cable" of different conformation. Even in Figure 1b the "ribbon cable" as a whole is indicated with the number 120, just as the sheath is always indicated with the number 121 and the conductive tapes with the number 122. Compared to the type shown in Figure 1a it has a greater number of conductors, in this example three, and four further wires, for example in optical fiber, indicated with the number 123 and suitable for the transport of communication signals, in general these are lines for data transmission.

Although wider, as it includes more internal conductors, the "ribbon cable" presented in Figure 1b, substantially maintains the same thickness as the simple cable of Figure 1a: consequently the overall dimensions of the rewound cable (when the extension is not in use ), in relation to its length, remains very limited, and the compactness requirement of the rewound extension continues to be very satisfactory.

Figure 2 presents a typical application context of an "extension system" according to the teachings of the present invention, and highlights the essential elements that characterize the system itself. The "extension system" as a whole is indicated with the number 100: it is very distributed, it includes a plurality of elements among which, the main ones are presented in Figure 2 and are indicated with three-digit numbers in which the first digit is "1". Numbers whose first digit is different from "1" indicate entities that represent the context of application of the "extension system" 100.

The number 210 indicates a generic work environment, very large, in which there is the need to have a power point and access to a data network. Typical examples of work environments of this type are: a construction site, a large warehouse, or a setting for an exhibition (fair or museum). Normally, in such very large rooms, the nearest power socket is located at a considerable distance from the point where a device is to be powered, so that an extension cable is required. In the example of Figure 2 there is a single socket indicated with the number 411. Said socket 411 of the workplace 210 is connected to an electrical distribution network, indicated with the number 400, which also distributes power in other environments, including an environment distinct from environment 210, indicated with the number 220, and in which there is access to a data network, indicated with the number 300, and represented, by way of example, with a telecom station suitable to implement a radio link.

It is noted that for the purposes of the application of the present invention, the access to the data network 300, available in the environment 220, can be of any type: that is, it can be an access that takes place directly on a network apparatus (as in the case of example in Figure 2), but it can also be an access carried with a cable, and made available with a wall socket, or any other type of access, as long as it is a wired access to a data network.

Therefore, said electrical distribution network 400 carries electrical power also to said further environment 220 in which there is access to a data network 300; and number 421 indicates an electrical socket which provides access for connection to said electrical network 400 in said further room 220.

A first essential component for the implementation of the "extension system" taught in the present invention is the element indicated with the number 110, which is a first "Powerline" modem that is connected both to said data network 300 and to said electric network 400.

The function of said first "Powerline" modem 110 is that of:
- modulating the signals coming from said data network 300 which must be propagated on the electrical network 400, so that they are superimposed on the electrical voltage that transports the electrical energy, and
- demodulating the signals to be routed towards said data network 300 which are present on said electrical network 400.

A second "Powerline" 130 modem, in the form of implementation of Figure 2, is located near the socket 411 which is located in the workplace 210, and it is connected to this socket.

The function of said second "Powerline" modem 130 is that of:
- modulating the signals to be routed towards said data network 300, which must be propagated on the electrical network 400, and
- demodulating the signals received from said data network 300 which are present on said electrical network 400, superimposed on the electrical voltage that transports the electrical energy.

In this way, in proximity to the socket 411, present in the workplace 210, they are available both an access to the power supply (since the socket 411 performs precisely this function) and an access to the data network 300, which, in fact, can be reached via a "Powerline" connection, made with the pair of modems 110 and 130, which allow the electrical cables of the electrical distribution network 400 to be used also for data transmission.

These accesses to the data network and to the electrical power supply, which are located in correspondence with the electrical socket 411, are close to each other, and therefore they can be remoted in any other point of the work environment 210 with an extension consisting of a cable that couples electrical conductors for the transport of the power supply and cables suitable for data transmission. In Figure 2, this cable is indicated with the number 120, and, in a typical implementation form, it is a "ribbon cable" like the one presented in Figure 1b, and indicated with the number 120 again.

The "extension system" is completed with a remote element 140 with the function of presenting suitable connectors, in the point indicated with number 141, to connect a device that requires power supply and a data connection.

As will be clarified later on, said remote element 140 also performs other interesting functions, including that of acting as a collector for the cable 120, when the extension is not used..

It should be noted that the use of a pair of "Powerline" modems allows you to move an access to a data network 300, which is located near an access to an electricity distribution network 400, to any other point, where there are other accesses to the same electrical distribution network 400. Actually, the particular use of said pair of "Powerline" modems 110 and 130, allows to define a method to make available at least one access to an electrical network and at least one access to a data network at a remote point 141 of a work environment 210 in which there is an electrical socket 411 for accessing an electrical network 400 (and where, typically, there is no access to data networks), and this method is characterized in that it comprises at least the following two steps:
1) connecting said first "Powerline" modem 110 to an access to a data network 300 and, at the same time, to an electrical outlet 421, for access to said electrical network 400, and present in an environment other then said work environment 210;
2) connecting said second "Powerline" modem 130 to said electrical socket 411, for access to said electrical network 400, present in said work environment 210.

The operating principle of the "extension system" presented with the help of Figure 2 can be implemented according to some variants which, in turn, can be classified according to at least two large groupings.

The first group includes the "extension systems" in which said second "Powerline" modem 130, i.e. the "Powerline" modem located in the work environment 210, therefore far from the access to the data network 300, is positioned near the electrical socket 411 located in the workplace 210. This first group of "extension systems", according to the invention, is better illustrated with the aid of Figure 3a.

The second group includes the "extension systems" in which said second "Powerline" modem 130, that is the "Powerline" modem located in the work environment 210, therefore far from the access to the data network 300, is positioned in correspondence of the work point 141, and therefore not in the vicinity of the electrical socket 411 which is located in the workplace 210. This second group of "extension systems", according to the invention, is better illustrated with the aid of Figure 3b.

In each of the two Figures 3a and 3b two distinct environments are depicted, each within a hatched area of the figures. In general, the "extension system" taught in the present invention is installed in both of these two environments: the work environment where there is an electrical power socket (but there is no data access), and an environment separate from the work environment, where there is data access.

In the lower part of each figure is shown, indicated with the number 210, the so-called work environment, i.e. the environment in which you want to make contemporarily available an access to the power supply and access to a data network, at a generic point, indicated with the number 141. In said work environment 210 there is only one socket for connecting to an electric power supply network; this electrical outlet is indicated with the number 411, while the power supply distribution network is indicated with the number 400.

In the work environment 210, it is assumed that access to a data network is not available, while said access to a data network is instead available in a separate environment, indicated with the number 220, and represented in the upper part of both Figures 3a and 3b. In said separate environment 220 there is both access to a data network, indicated with the number 300, and an access to the electricity distribution network 400. It is noted that the separate environment 220, where access to the data network 300 is present, is the same in the two figures 3a and 3b: in fact, the two groups of implementation variants of the "extension system" according to the invention substantially differ just in the part located in the work environment 210.

In the separate environment 220, the "extension system" according to the invention substantially provides for the installation of a first "Powerline" modem which interfaces the data network 300 to the electrical distribution network 400, performing the functions already explained above using Figure 2.

As anticipated, in Figure 3a, in the work area 210, there is a second "Powerline" modem, indicated with the number 130. Said second "Powerline" 130 modem is designed to be placed near the power socket 411 present in the working environment 210, and therefore can be connected directly to said power socket 411, where a modulated data signal and a power supply voltage are present at the same time. The function of said second "Powerline" 130 modem is to separate the data signal from the power supply voltage and demodulate it so that the data content is intelligible separately.

Schematically, therefore, it can be assumed that an electric power supply line and a data line are made available, independently, at the output of said "Powerline" modem 130. At this point, the two accesses, to data and to the power supply, are finally close, and can be remoted in any point of the working environment 210 by means of a suitable cable, indicated in Figure 3a with the number 120. Obviously, being the two lines separate, for the data and for the power supply, said cable 120 will have to aggregate various cables to carry the data and the power supply separately.

In the preferred implementations of the present invention, according to the variant illustrated in Figure 3a, the cable 120 is a ribbon cable in which the power supply is transported with two or three conductive strips, typically in copper, while the data are transported by means of optical fibers.

In general, therefore, it is necessary to provide an adaptation stage of the data signal as it results from the "Powerline" demodulation, so that this is transformed into a signal suitable to be transported by the cable 120: in the specific case of the example, it must be transformed into an optical signal. Therefore, in Figure 3a, the number 131 represents this adaptation stage which ensures that the output of the "Powerline" modem 130 is suitable for being transported in the cable 120. Said adaptation stage 131 can be implemented with a separate element, or it can be integrated in said second "Powerline" modem130.

Finally, said cable 120 terminates on a remote element 140, which can be freely positioned within the working environment 210. Said remote element 140, in the cases of the implementation forms referable to Figure 3a, from the functional point of view, must perform only a further adaptation and termination function of the lines, to offer the appropriate access interfaces (both to the power supply and to the data line) in point 141.

In Figure 3b, differently from what happens in the form of implementation described in Figure 3a, no second "Powerline" modem 130 is located near the power socket 411 present in the workplace 210, and the cable 120 of the extension system is connected directly to socket 411. In this case, the cable 120 is a pure electric cable (it does not need to contain optical fibers or other cables dedicated to data transmission), as the data signal and the power supply voltage are still superimposed thus as they are in the conductors of the electrical distribution network 400. Therefore, the power supply and data signal remain superimposed on each other up to the remote element 140.

At this point, given that the objective of the present invention is to offer two distinct accesses to a data network and to the power supply at the remote point 141, a "Powerline" modulation / demodulation function is obviously required.

In the group of implementation variants represented by Figure 3b, therefore, a "Powerline" modem must necessarily be integrated into the remote element 140, as shown in Figure 3b.

The two forms of implementation presented with the help of Figures 3a and 3b both have advantages and disadvantages.

In fact, the implementation summarized in Figure 3b appears simpler (and more practical to use), involves fewer transformations of the data signal, and a smaller number of devices. However, the remote element 140 is decidedly more complex, and the data transmission section in "Powerline" (i.e. the section where data transmission is superimposed on the power supply voltage) is longer, which could have contraindications in terms of signal-to-noise ratio, and ultimately on the quality of the extension for data.

The implementation summarized in Figure 3a is instead more complex and with a greater number of elements to be installed, but allows the use of many elements already available on the shelf, without having to integrate them specifically to create the "extension system" according to the invention. For example, the second "Powerline" modem 130 is a twin of the first "Powerline" modem110, and is an available device that does not need to be made ad-hoc to implement the invention, so as the other adaptation elements are available on the shelf to realize the adaptation stage 131. In addition, the fiber optic data transmission section (or another cable dedicated to data transmission) between the "Powerline" modem 130 and the remote element 140 is extremely reliable, and essentially does not introduce any deterioration of the data signal. Finally, the remote element 140 is simpler, having only to provide for the header of the cables contained in the cable 120 and to provide a mechanical support for the rewinding of the cable 120 when the extension is not in use, or must be transported.

Having clarified the general principles of the invention, both from the point of view of the system and from the point of view of the operational use, Figures 4a and 4b present some characteristics referring to an implementation of a working prototype, effectively applicable in the field, which helps to further describe the invention, highlighting further details, as well as making its effectiveness and usefulness appreciated.

In particular, Figures 4a and 4b show how a remote element 140 appears in a particularly compact form of implementation. The shape of said remote element 140 shown in Figures 4a and 4b is essentially an elongated parallelepiped, inside which there are two winding reels, indicated with numbers 142 and 143, which allow the rewinding of the "ribbon cable" 120.

This arrangement of the two winding reels allows to obtain a free space between the two winding reels, which can be used to house other components. In fact, this space is largely sufficient to easily accommodate the various adapters to present externally the suitable connectors, or even to accommodate devices that perform the function of "Powerline" modem, as is required in some forms of implementation of the present invention. The remote element 140 presented in Figures 4a and 4b also has doors that allow the access to the interior for maintenance or reconfiguration (for example, facilitating the replacement of some connectors, or other devices).

In the embodiment shown in Figures 4a and 4b, the connectors available in the remote element 140, to connect the user's devices, are designed to be stationary with respect to the casing of the remote element 140 itself, while the spool 143 to which the ribbon cable 120 is hooked, obviously, it must rotate for the winding or unwinding maneuvers of the cable itself: therefore a mobile contact must be provided between the connectors and a point of the winding reel, which must be able to rotate. There are, and they are quite reliable, numerous ways to make sliding contacts, especially because, when the "extension system" is in operation, the contact is a firm physical contact. However, there are also other implementation variants, which can allow to avoid the sliding contact, the consequent wear and friction that this generates and which makes the winding and unwinding maneuvers of the "ribbon cable" 120 less fluid. For example, through a door located in correspondence with the reel 143 to which it is hooked in the ribbon cable, it is possible to access the reel itself to manually activate and deactivate the electrical contact, so that, when the "extension system" is in operation, the electrical contact is open, and the reel free to rotate, when the remote element 140 is positioned in the working point, instead, the contact is closed and the reel locked so that it cannot rotate. In this way, moving contacts and sliding clutches can be avoided.

Figure 4b shows in an axonometric view exactly the same remote element 140 shown in Figure 4a, which instead offers two orthogonal views. From the representation of this embodiment, presented in figures 4, which is taken from the project of a real prototype, it is also possible to appreciate the compactness of the remote element 140 which, in fact, is the element that determines the size of the "extension system" when this is not used and must be stored or transported. In order to provide a quantitative indication of this size, it can be stated that an "extension system" according to the present invention, suitable for remoting an access to an electrical power supply and a data connection by a few tens of meters from the nearest socket, can be approximately contained in a parallelepiped smaller than 40 X 15 X 8 cm.

Finally, and for completeness, with the help of Figures 5a and 5b, we present an example of a "Powerline" modem readily available (and at low cost) on the market. As you can see, it is a small and easy to install object, which can be included in the "extension system" according to the invention as it is made available on the market, but which can also be easily customized, for the specific application, in the present invention. For example, it can be integrated into the remote element 140; or it can be made in a casing with a suitable shape so that it can be easily stored in the remote element 140 when the extension is not in use; or it can be integrated into a multiple electrical socket, in order to adapt to a plurality of power sockets, so as to make the "extension system" adaptable to a large variety of environments without the need of plug adapters; or it can also be integrated with an adaptation stage 131 such as that indicated in Figure 3a.

Ultimately, the concept we intend to affirm is that the "Powerline" technology, although it was not conceived with the primary purpose of being integrated into an "extension system", is a known technology that can be integrated into the "extension system", which is the object of the present invention, without particular problems: in some cases exactly as offered by the market.

In conclusion, the "extension system" 100 made by means of a "ribbon cable", and made according to the teachings of the present invention, compared to the traditional solutions proposed by the known art, appears to be very effective in supporting the need to set up contemporarily in a given remote point, an access both to the electrical power supply and to a network that offers data connectivity.

In general, then, the present invention lends itself to numerous variants while maintaining the claimed prerogatives. In fact, it can be developed in different sizes, and, as already mentioned, it may include different quantities of conductors to carry electrical power, with various powers and regimes; as well as remote data access can make use of different combinations of modulations and demodulations. Furthermore, the invention itself can be realized partially, as well as some described details can be replaced by technically equivalent elements.

In particular, the use of specific technologies and materials does not constitute an essential part of the present invention. Therefore, if in the future the materials sector were to make available new technologies, more advantageous than those mentioned in the preferred implementations, in order to implement the present invention more efficiently, for example with the development of new lighter conductive materials, or more flexible, or workable in thinner strips, further improvements could be made without changing the inventive nature and the principles that inspired the invention itself.

Other possible variants for the present invention could be related to the evolution of electronic technologies in general (which are evolving towards an ever greater miniaturization and an ever lower power requirement), so the "extension system" indicated in the invention could, for example, integrate components of varying complexity and also perform other functions, additional to the sole function of the remoting of an access a the power supply and to a data network.

Therefore, especially in the context of such evolutionary scenarios, the invention lends itself to incorporating and supporting further development and improvement efforts, capable of improving the performance of the described system.

## Claims

1. Extension system (100) adapted to make available at a remote point (141) of a work-environment (210) at least one access to an electrical network and at least one access to a data network, and said extension system (100) comprises:
✔ a remote element (140), adapted to be positioned in said work environment (210), on which there are connectors to provide at least one access to an electrical network and at least one access to a data network;
✔ a "ribbon cable" (120) suitable to be rolled on said remote element (140) and unrolled as necessary, in order to reach, with its free end, an electric socket (411), present in said work-environment (210), suitable for connection to an electrical network (400);
✔ a first "Powerline" modem (110) designed to be connected to an access to a data transmission network (300), and to be also connected to said electrical network (400);
and said extension system (100) is **characterized in that** it also comprises a second "Powerline" modem (130), integrated in said remote element (140), and said second "Powerline" modem (130) is designed to be coupled to said first "Powerline" modem (110) by means of said electrical network (400), in order to make available said at least one access to a data network in said emote point (141), by said extension system (100).

2. Extension system (100) according to claim 1 wherein said remote element (140) comprises at least two electrical sockets and a rj45 female connector for data connections.

3. Extension system (100) according to claim 1 wherein said free end of said "ribbon cable" (120) is designed to be connected directly to said electrical socket (411) present in said work-environment (210).

4. Extension system (100) according to claim 1 wherein said remote element (140) comprises two spools 142 and 143 arranged to wind said "ribbon cable" (120).

## Patentansprüche

1. Erweiterungssystem (100), das an einem entfernten Punkt (141) einer Arbeitsumgebung (210) mindestens einen Zugang zu einem elektrischen Netzwerk und mindestens einen Zugang zu einem Datennetzwerk bereitstellt, und das Erweiterungssystem (100) umfasst:
✔ ein Remote-Element (140), das zur Positionierung in der Arbeitsumgebung (210) geeignet ist und an dem sich Anschlüsse befinden, um mindestens einen Zugang zu einem Stromnetz und mindestens einen Zugang zu einem Datennetz bereitzustellen;
✔ ein "Flachbandkabel" (120), das auf das entfernte Element (140) aufgerollt und nach Bedarf abgerollt werden kann, um mit seinem freien Ende eine in der Arbeitsumgebung (210) vorhandene elektrische Steckdose (411) zu erreichen, die für den Anschluss an ein Stromnetz (400) geeignet ist;
✔ ein erstes "Powerline"-Modem (110), das dazu bestimmt ist, an einen Zugang zu einem Datenübertragungsnetzwerk (300) angeschlossen zu werden und auch an das elektrische Netzwerk (400) angeschlossen zu werden;
und das Erweiterungssystem (100) ist **dadurch gekennzeichnet, dass** es außerdem ein zweites "Powerline"-Modem (130) umfasst, das in das Remote-Element (140) integriert ist, und das zweite "Powerline"-Modem (130) so ausgelegt ist, dass es über das elektrische Netzwerk (400) mit dem ersten "Powerline"-Modem (110) gekoppelt werden kann, um über das Erweiterungssystem (100) mindestens einen Zugang zu einem Datennetzwerk im Remote-Punkt (141) bereitzustellen.

2. Erweiterungssystem (100) nach Anspruch 1, wobei das Remote-Element (140) mindestens zwei elektrische Buchsen und eine RJ45-Buchse für Datenverbindungen umfasst.

3. Erweiterungssystem (100) nach Anspruch 1, wobei das freie Ende des "Flachbandkabels" (120) dazu bestimmt ist, direkt an die in der Arbeitsumgebung (210) vorhandene elektrische Steckdose (411) angeschlossen zu werden.

4. Erweiterungssystem (100) nach Anspruch 1, wobei das entfernte Element (140) zwei Spulen 142 und 143 umfasst, die zum Aufwickeln des "Flachbandkabels" (120) angeordnet sind.

## Revendications

1. Système d'extension (100) adapté pour rendre disponible à un point distant (141) d'un environnement de travail (210) au moins un accès à un réseau électrique et au moins un accès à un réseau de données, et ledit système d'extension (100) comprend:
✔ un élément distant (140), adapté pour être positionné dans ledit environnement de travail (210), sur lequel se trouvent des connecteurs pour fournir au moins un accès à un réseau électrique et au moins un accès à un réseau de données ;
✔ un « câble ruban » (120) apte à être enroulé sur ledit élément distant (140) et déroulé selon les besoins, afin d'atteindre, avec son extrémité libre, une prise électrique (411), présente dans ledit environnement de travail (210), apte à être connectée à un réseau électrique (400);
✔ un premier modem «Powerline» (110) destiné à être connecté à un accès à un réseau de transmission de données (300), et à être également connecté audit réseau électrique (400);
et ledit système d'extension (100) est **caractérisé en ce qu'**il comprend également un deuxième modem « Powerline » (130), intégré dans ledit élément distant (140), et ledit deuxième modem « Powerline » (130) est conçu pour être couplé audit premier modem « Powerline » (110) au moyen dudit réseau électrique (400), afin de rendre disponible ledit au moins un accès à un réseau de données dans ledit point distant (141), par ledit système d'extension (100).

2. Système d'extension (100) selon la revendication 1 dans lequel ledit élément distant (140) comprend au moins deux prises électriques et un connecteur femelle RJ45 pour les connexions de données.

3. Système d'extension (100) selon la revendication 1 dans lequel ladite extrémité libre dudit « câble ruban » (120) est conçue pour être connectée directement à ladite prise électrique (411) présente dans ledit environnement de travail (210).

4. Système d'extension (100) selon la revendication 1 dans lequel ledit élément distant (140) comprend deux bobines 142 et 143 agencées pour enrouler ledit « câble ruban » (120).
